(19)

Europäisches
Patentamt
European
Patent Office
Office européen
des brevets

(11) **EP 3 373 199 A2**

(12) **EUROPEAN PATENT APPLICATION**

(43) Date of publication:
**12.09.2018 Bulletin 2018/37**

(51) Int Cl.:
***G06K 9/00*** *(2006.01)*

(21) Application number: **18157686.9**

(22) Date of filing: **20.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **08.03.2017 JP 2017044135**

(71) Applicant: **Ricoh Company Ltd.**
**Ohta-ku**
**Tokyo 143-8555 (JP)**

(72) Inventors:
• **YAMADA,, Yuu**
 **Tokyo, 143-8555 (JP)**
• **TAKAHASHI,, Sadao**
 **Tokyo, 143-8555 (JP)**

(74) Representative: **J A Kemp**
 **14 South Square**
 **Gray's Inn**
 **London WC1R 5JJ (GB)**

(54) **OBJECT DETECTOR, OBJECT DETECTION METHOD, CARRIER MEANS, AND EQUIPMENT CONTROL SYSTEM**

(57)     An object detector (1), an object detection method, a carrier means, and an equipment control system. The object detector and the object detection method includes detecting a feature point, from a first captured-image area captured in a first capturing area (31) that corresponds to a center of a wide-angle lens having a prescribed angle of view or a second captured-image area captured in a second capturing area (32) that corresponds to a periphery of the wide-angle lens, detecting, when an amount of feature point detected from the first captured-image area is equal to or greater than a predetermined amount, an object existing in the first captured-image area based on the feature point detected from the first captured-image area, and detecting an object existing in the captured image based on the feature point detected from the second captured-image area when the amount of feature point detected from the first captured-image area is smaller than the predetermined amount.

FIG. 10

EP 3 373 199 A2

**Description**

BACKGROUND

Technical Field

The present disclosure relates to an object detector, an object detection method, a carrier means, and an equipment control system.

Background Art

Currently, for example, mobile objects such as cars that a driver or a pilot drives or operates and uncrewed aircrafts that can fly on automatic pilot or remote control measure the distance to an object around using a camera, a light detection and ranging (LiDAR) device, or a sensor device such as a millimeter-wave radar device, and perform, for example, collision avoidance or error control based on object detection.

Above all, object detection technologies using cameras that can detect even the shapes of objects become widespread, and object detection technologies that further broaden the capturing area using wide-angle lenses such as fish-eye lenses are also suggested.

The disclosure of JP-2009-198445-A relates to an object detection device aimed at detecting movement data such as the speed and position of a target object with a high degree of precision. In such an object detection device, multiple areas to be processed are set according to the disposed position of a stereo camera and the height and position of a target object, and these multiple areas to be processed are set on the obtained images. Moreover, methodologies based on the principles of a planar projection stereopsis method are applied to each one of the set areas to be processed, and target objects such as a pedestrian or a bicycle are detected. The results of the object detection that is performed on each one of the areas to be processed are integrated, and target objects are detected from the entire image. Then, the detected target objects are tracked in chronological order, and movement data such as the speed and position of each target object is detected.

In such object detection devices, a captured image is divided into multiple partitions, and object detection is performed on each one of the multiple partitions. Further, the results of the object detection that is performed on each one of the areas to be processed are combined, and target objects are detected from the entire image. Due to this configuration, even when the condition is affected by lighting or changes in weather, a target object can robustly be detected, and movement data such as the speed and position of the target object can be detected with a high degree of precision.

Although it is advantageous that the capturing area becomes wider when a wide-angle lens is used for object detection, the properties and characteristics of the wide-angle lens are different to a larger degree between the center and periphery of the lens. For this reason, when a wide-angle lens is used for object detection, there is some concern that an error at the periphery of the lens increases and an object may erroneously be detected.

For example, it is assumed that an object such as a wall with a little texture or characteristics such as a pattern or a shape is captured at a short distance. In such a case, the captured image is a simple white image that is featureless in its entirety. What is more, no boundary of the wall is captured on such a white captured image. Accordingly, object detection is performed based on such a simple white captured image, and thus it is very difficult to perform precise object detection. Even if object detection is performed in the object detection device of JP-2009-198445-A upon dividing a captured image that is white in its entirety as above, each of the partitions is a simple white captured image. For the above reasons, it is very difficult to perform precise object detection.

SUMMARY

Embodiments of the present disclosure described herein provide an object detector, an object detection method, a carrier means, and an equipment control system. The object detector and the object detection method includes detecting a prescribed feature point to be used for object detection, from a first captured-image area captured in a first capturing area that corresponds to a center of a wide-angle lens having a prescribed angle of view or a second captured-image area captured in a second capturing area that corresponds to a periphery of the wide-angle lens, detecting, when the prescribed feature point is detected from the first captured-image area and an amount of feature point detected from the first captured-image area by the detecting the prescribed feature point is equal to or greater than a predetermined amount, an object existing in the first captured-image area based on the prescribed feature point detected from the first captured-image area, and detecting an object existing in the captured image based on the feature point detected from the second captured-image area when the prescribed feature point is detected from the second captured-image area and the amount of feature point detected from the first captured-image area is smaller than the predetermined amount.

The carrier means carries computer readable code for controlling a computer system to carry out the above method. The equipment control system includes an imager, a feature point detector, an object detector, and a controller. The imager includes an imaging device configured to capture an image in a prescribed capturing area from two different points and output a captured image, a disparity image generator configured to generate a disparity image using the captured image output from the imaging device, the disparity image generated by the disparity image generator including a first disparity image obtained from a first capturing area that corresponds to a center of a wide-angle lens having a prescribed angle of view and a second disparity image obtained from a second capturing area that corresponds to a periphery of the wide-angle lens, a feature point detector configured to detect a prescribed feature point to be used for object detection from the first disparity image and the second disparity image, and an object detector configured to detect an object existing in the first disparity image based on the feature point detected from the first disparity image when an amount of feature point detected from the first disparity image by the feature point detector is equal to or greater than a predetermined amount, and to detect an object existing in the second disparity image based on the feature point detected from the second disparity image when the amount of feature point detected from the first disparity image is smaller than the predetermined amount. The controller controls prescribed operation of the imager based on a result of the object detection.

According to one aspect of the present disclosure, objects can be detected with a high degree of precision.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a diagram illustrating an equipment control system in which a stereo camera is provided for a vehicle, according to a first embodiment of the present disclosure.

FIG. 2 is a perspective view of a stereo camera provided for an equipment control system according to first embodiment of the present disclosure.

FIG. 3 is a diagram illustrating the capturing areas of the right and left imaging devices of a stereo camera, according to an embodiment of the present disclosure.

FIG. 4 is a diagram illustrating the capturing areas of the center of the lens and the periphery of the lens of a stereo camera provided with wide-angle lenses, according to an embodiment of the present disclosure.

FIG. 5 is a block diagram of a hardware configuration of a stereo camera, according to an embodiment of the present disclosure.

FIG. 6 is a functional block diagram of a software configuration of a stereo camera, according to an embodiment of the present disclosure.

FIG. 7 is a functional block diagram of an object detector of a stereo camera, according to an embodiment of the present disclosure.

FIG. 8A and FIG. 8B are diagrams each illustrating a way of setting a capturing area for a stereo camera, according to an embodiment of the present disclosure.

FIG. 9 is another way of setting a capturing area for a stereo camera, according to an embodiment of the present disclosure.

FIG. 10 is a flowchart of object detection processes of an object detector, according to the first embodiment of the present disclosure.

FIG. 11A and FIG. 11B are diagrams each illustrating object detection performed by an object detector using a disparity image that is captured through the periphery of a wide-angle lens, according to an embodiment of the present disclosure.

FIG. 12A and FIG. 12B are diagrams each illustrating the relation between the right and left edges of an obstacle and the right and left edges of the capturing area of a first disparity image that corresponds to the center of a wide-angle lens, according to an embodiment of the present disclosure.

FIG. 13 is a flowchart of object detection processes of an object detector, according to a second embodiment of the present disclosure.

FIG. 14 is a diagram illustrating repeated patterns on an object, where those repeated patterns function as a texture of the object.

FIG. 15 is a flowchart of object detection processes of an object detector, according to a third embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

<Configuration of Equipment Control System according to First Embodiment>

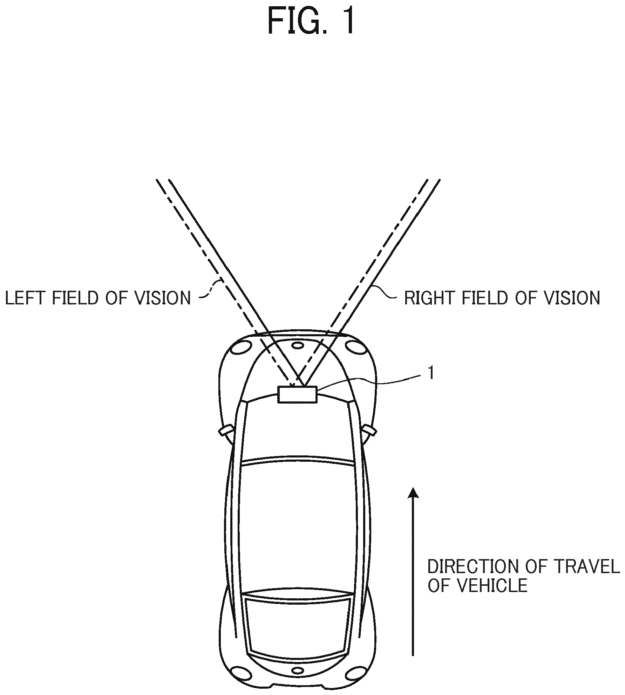

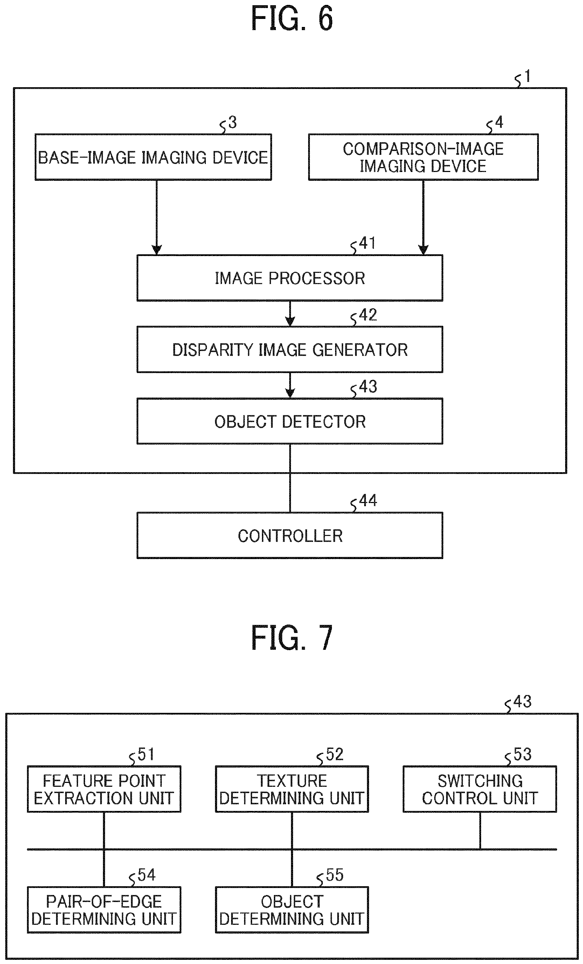

An equipment control system according to a first embodiments of the present disclosure is described below. This is merely an example, but as illustrated in FIG. 1, the equipment control system according to the first embodiment detects an object around the car and performs driver assistance such as brake control, acceleration control, and steering control. This is also merely an example, but the equipment control system according to the first embodiment uses a disparity image captured by a stereo camera 1 to generate the data of the distance to an object. As illustrated in FIG. 1, the stereo camera 1 is mounted near the front windshield of the car in order to capture, for example, the sight ahead of the car (or sights in other directions with reference to the car). The equipment control system is provided with the stereo camera 1 and a controller 44 as illustrated in FIG. 6.

<Configuration of Stereo Camera>

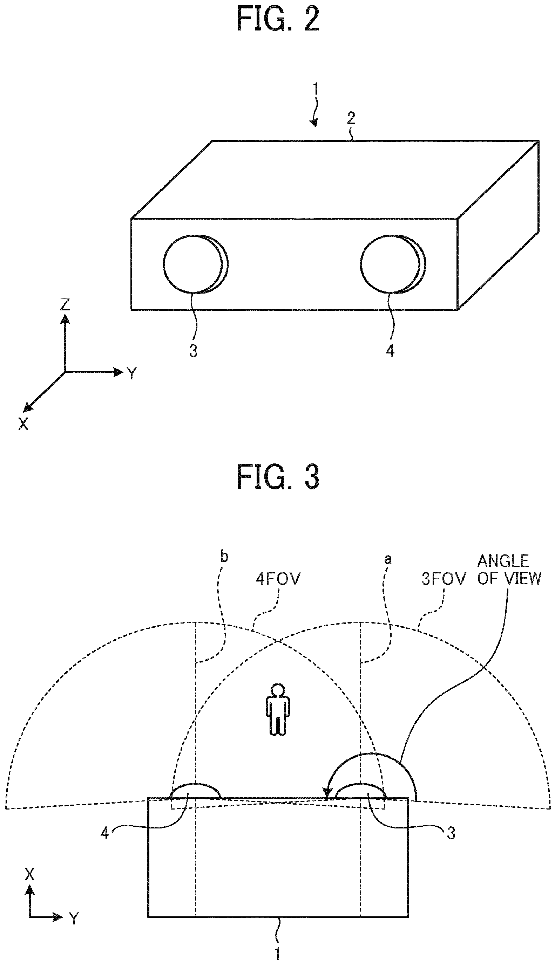

FIG. 2 is a diagram illustrating the external appearance of the stereo camera 1, according to the present embodiment.

As illustrated in FIG. 2, the stereo camera 1 includes a housing 2, and a base-image imaging device 3 that is an imaging optical system for the right eye and a comparison-image imaging device 4 that is an imaging optical system for the left eye. For example, the housing 2 is formed of aluminum (Al), and is shaped like a box.

The base-image imaging device 3 and the comparison-image imaging device 4 are arranged inside the housing 2, and each of the base-image imaging device 3 and the comparison-image imaging device 4 has a wide-angle lens whose angle of view is, for example, 180 degrees or 200 degrees. As illustrated in FIG. 3, the base-image imaging device 3 and the comparison-image imaging device 4 are arranged such that an optical axis a of the base-image imaging device 3 becomes parallel to an optical axis b of the comparison-image imaging device 4. The semicircular areas that are indicated by dotted lines in FIG. 3 indicate a capturing area 3FOV of the base-image imaging device 3 and a capturing area 4FOV of the comparison-image imaging device 4. the overlapping area between the capturing area 3FOV of the base-image imaging device 3 and the capturing area 4FOV of the comparison-image imaging device 4 is the distance-measurable area where the distance to an object is measurable based on a disparity obtained from a base image captured by the base-image imaging device 3 and a comparison image captured by the comparison-image imaging device 4. In FIG. 3, the capturing area 3FOV and the capturing area 4FOV are drawn as if the dimension in the +X-direction and the dimension in the +Y-direction are limited. However, this is merely for the sake of explanatory convenience, and in actuality, the dimensions are not limited.

<Capturing Area used for Object Detection>

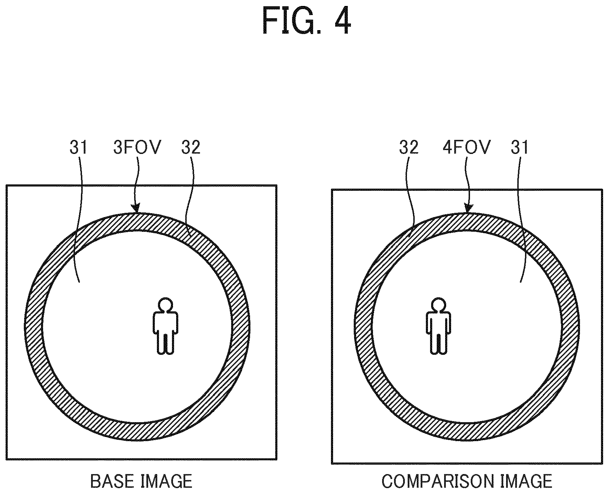

FIG. 4 is a diagram illustrating the capturing areas of the center and periphery of the lens of each of the base-image imaging device 3 and the comparison-image imaging device 4 provided for the stereo camera 1, according to the present embodiment.

As described above, a wide-angle lens whose angle of view is, for example, 180 degrees or 200 degrees is provided for each of the base-image imaging device 3 and the comparison-image imaging device 4. A first captured-image area is captured in a first capturing area 31 that corresponds to the center of a wide-angle lens. Under a first condition, the equipment control system according to the first embodiment uses the first captured-image for object detection. A second captured-image area is captured in a second capturing area 32 that corresponds to the periphery of the wide-angle lens. Under a second condition, the equipment control system according to the first embodiment uses the second captured-image area for the object detection. The object detection as above will be described later in detail.

<Hardware Configuration of Stereo Camera>

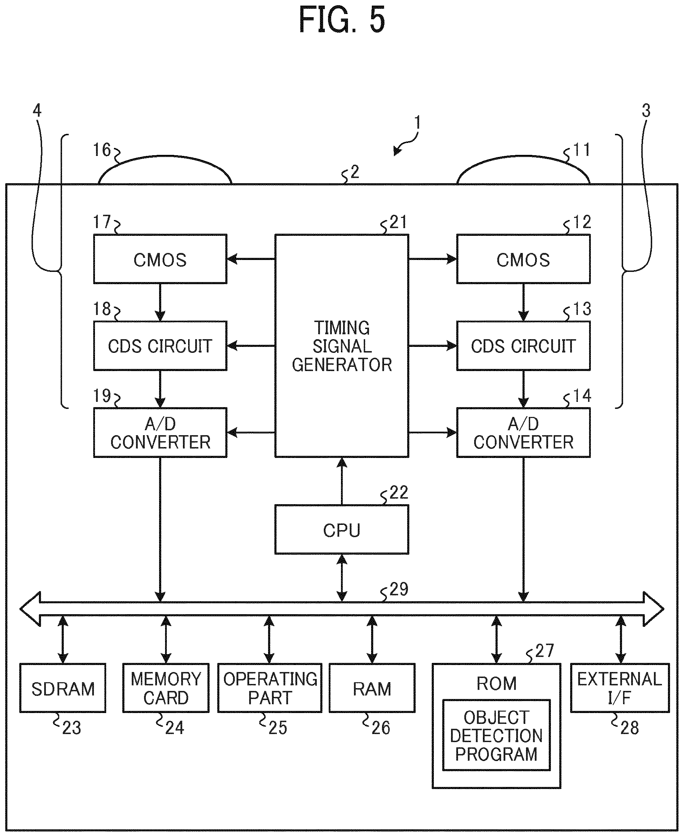

FIG. 5 is a block diagram of a hardware configuration of the stereo camera 1, according to the present embodiment.

In FIG. 5, the object light that has passed through an imaging lens 11 of the base-image imaging device 3 is received by a complementary metal oxide semiconductor (CMOS) sensor 12, and the object light that has passed through an imaging lens 16 of the comparison-image imaging device 4 is received by a complementary CMOS sensor 17. Each of the CMOS sensor 12 and the CMOS sensor 17 converts the optical image formed on an imaging area into an electrical signal and outputs an analog image signal. Note also that a different type of imaging device such as a charge coupled device (CCD) image sensor may be used in place of the CMOS sensor 12 and the CMOS sensor 17.

Noise of the image data that is output from the CMOS sensor 12 and noise of the image data that is output from the CMOS sensor 17 are eliminated by a correlated double sampling (CDS) circuit 13 and a CDS circuit 18, respectively, and the image data (analog image signals) that are output from the CMOS sensor 12 and the CMOS sensor 17 are converted into digital image data by an analog-to-digital (A/D) converter 14 and an A/D converter 19.

Note also that the timings of operation of the CMOS sensor 12 and the CMOS sensor 17, the CDS circuit 13 and the CDS circuit 18, and the A/D converter 14 and the A/D converter 19 are controlled by a timing signal of a prescribed frequency generated by a timing signal generator 21.

A synchronous dynamic random access memory (SDRAM) 23 stores the image data on a temporary basis while images are being processed. The processed image data is stored in a memory card 24. The image data may undergo predetermined image compression processes or the like and then be stored in the memory card 24.

The timing signal generator 21 and the memory card 24 are controlled by a central processing unit (CPU) 22. A read only memory (ROM) 27 stores, for example, an object detection program to be executed by the CPU 22, as will be described later in detail. A random access memory (RAM) 26 is a readable and rewritable memory that serves as, for example, a work area to be used by the CPU 22 for various kinds of processes and a storage area in which various kinds of data are stored.

For example, an operating part 25 may be a so-called touch panel. The driver of a car controls the operating part 25 by touching with a finger or the like to specify or select a desired operation. An external interface (I/F) 28 is an interface between the stereo camera 1 and a controller that performs, for example, brake control or steering control of the car as driver assistance, where the stereo camera 1 and the controller are interconnected. The driver assistance including the brake control and the steering control will be described later in detail. These components are interconnected through a bus line 29.

<Software Configuration of Stereo Camera>

FIG. 6 is a diagram illustrating a software configuration of the stereo camera 1, according to the present embodiment.

The ROM 27 of the stereo camera 1 stores various kinds of programs such as an image processing program, a disparity image generation program, and an object detection program. The CPU 22 serves as an image processor 41 by executing an image processing program, and performs various kinds of image processing such as red, green, and blue (RGB) -> YCbCr conversion processes, white balance controlling processes, contrast correcting processes, edge enhancement processes, color conversion processes, gamma correcting processes, and collimation processes.

Moreover, the CPU 22 serves as a disparity image generator 42 by executing a disparity generation program, and generates a disparity image using a base image captured by the base-image imaging device 3 and a comparison image captured by the comparison-image imaging device 4, based on, for example, a result of stereo matching. Further, the CPU 22 serves as the disparity image generator 42 to calculate the distance to an object captured in the generated disparity image. A disparity is calculated on a pixel-by-pixel basis or on a pixel-block-by-pixel-block basis, and then disparity data is generated for every pixel or pixel block of the disparity image. The pixel block consists of one or more pixels. Due to this configuration, a disparity image can indicate the three-dimensional positions (i.e., the three-dimensional coordinates) of an object captured in a disparity image in the three-dimensional space. Accordingly, an object can be detected in the capturing direction.

The CPU 22 serves as an object detector 43 by executing an object detection program to detect an object in the image-capturing direction, and supplies the controller (vehicle engine control unit (ECU)) 44 with the results of the detection as object detection data through the external interface 28. The controller 44 performs driver assistance such as brake control or steering control of a car based on the object detection data.

<Functions of Object Detector>

FIG. 7 is a diagram illustrating detailed functional blocks of the object detector 43 that functions as the CPU 22 executes an object detection program, according to the present embodiment.

As illustrated in FIG. 7, the object detector 43 includes a feature point extraction unit 51 (i.e., an example of a feature point detector), a texture determining unit 52, a switching control unit 53, a pair-of-edge determining unit 54, and an object determining unit 55 (i.e., an example of an object detector).

In the present embodiment, the feature point extraction unit 51, the texture determining unit 52, the switching control unit 53, the pair-of-edge determining unit 54, and the object determining unit 55 are implemented by software. However, some of or all of the feature point extraction unit 51, the texture determining unit 52, the switching control unit 53, the pair-of-edge determining unit 54, and the object determining unit 55 may be implemented by hardware such as an integrated circuit (IC).

The object detection program may be installed for distribution in any desired computer-readable recording medium such as a compact disc, a read-only memory (CD-ROM), a flexible disk (FD), in a file format installable or executable by a computer. Moreover, the object detection program may be installed for distribution in any desired computer-readable recording medium such as a compact disc-recordable (CD-R), a digital versatile disk (DVD), a Blu-ray disc (registered trademark), and a semiconductor memory. Alternatively, the object detection program may be provided and installed through a network such as the Internet. The object detection program may be integrated in advance, for example, into the ROM inside the device for distribution.

A first captured-image area is captured in a first capturing area 31 that corresponds to the center of a wide-angle lens. Under a first condition where such a first captured-image area is captured in the first capturing area 31, the object detector 43 uses the first captured-image area to detect an object. A second captured-image area is captured in a second capturing area 32 that corresponds to the periphery of the wide-angle lens. Under a second condition where such a second captured-image area is captured in the second capturing area 32, the object detector 43 uses the second captured-image area to detect an object.

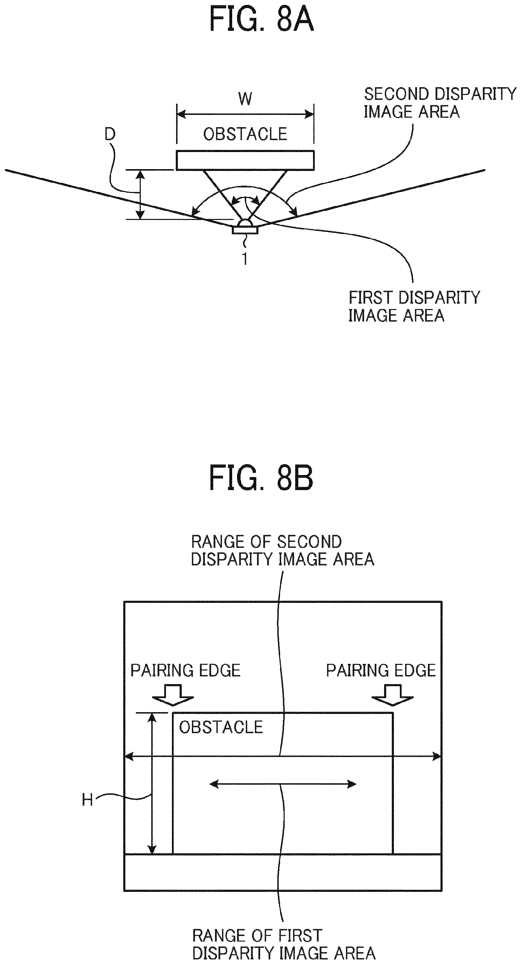

For example, the first capturing area 31 is determined based on a horizontal angle of view "θH" and a vertical angle of view "θV" that are calculated using Formula 1 and Formula 2 given below. As illustrated in FIG. 8A, the width of an obstacle is "W" m, and the distance between the obstacle and the wide-angle lens of each of the base-image imaging device 3 and the comparison-image imaging device 4 is "D" meters (m). Moreover, as illustrated in FIG. 8B, the height of the obstacle is "H" m.

[Formula 1]

$$\theta H = atan(W/(2 \times D)) \times 2$$

[Formula 2]

$$\theta V = atan(H/(2 \times D)) \times 2$$

The first capturing area 31 of a wide-angle lens is determined based on the result of calculation using Formula 1 and Formula 2 as above, and the area outside the first capturing area 31 is a second capturing area 32 as indicated by oblique lines in FIG. 4.

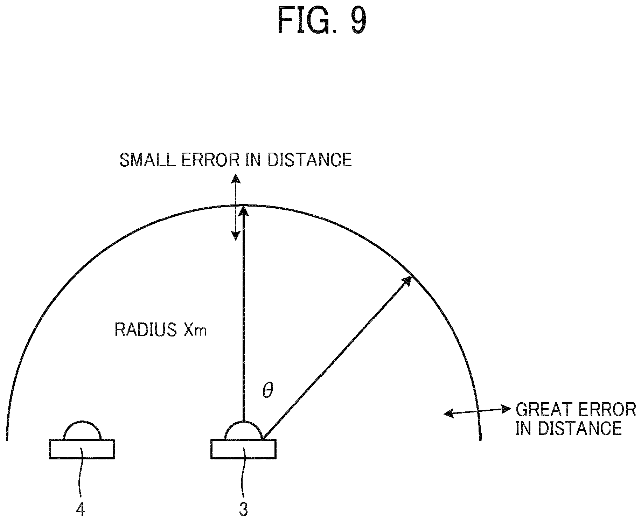

Alternatively, the capturing area 31 and the capturing area 32 may be determined as follows. More specifically, as illustrated in FIG. 9, the distance to an equally-distant object with reference to a wide-angle lens is measured. The half circle that is drawn in FIG. 9 indicates the positions with equal distance from the wide-angle lens. In such a configuration, the distortion on a captured image increases as the position of an object gets close to the periphery of the wide-angle lens. The disparity image generator 42 detects a disparity by performing matching processes (stereo disparity matching processes) on a comparison image captured by the comparison-image imaging device 4 and a base image captured by the base-image imaging device 3. However, an error occurs in the detected disparities depending on the angle that each of the equally-distant positions forms with the base-image imaging device 3 and the comparison-image imaging device 4. The first capturing area 31 is determined based on the above error. In other words, the first capturing area 31 is determined based on the positions that satisfy the condition as specified in Formula 3 given below.

[Formula 3]

Error in Distance Measurement in Center of Wide-angle Lens × Threshold < Error in

Distance Measurement at Angle θ

In a similar manner to the above, the areas outside the first capturing area 31 that are indicated by oblique lines as in FIG. 4 are set to be the second capturing areas 32.

<Object Detection Processes>

In the equipment control system according to the first embodiment, when the "amount of texture" (the number of feature points) of the first disparity image is equal to or greater than a predetermined amount, an object is detected using a first disparity image that is captured through the first capturing area 31 that is the center of the wide-angle lens. On the other hand, when the "amount of texture" (the number of feature points) of the first disparity image is less than the predetermined amount, an object is detected using a second disparity image that is captured in the second capturing area 32 that corresponds to the periphery of the wide-angle lens.

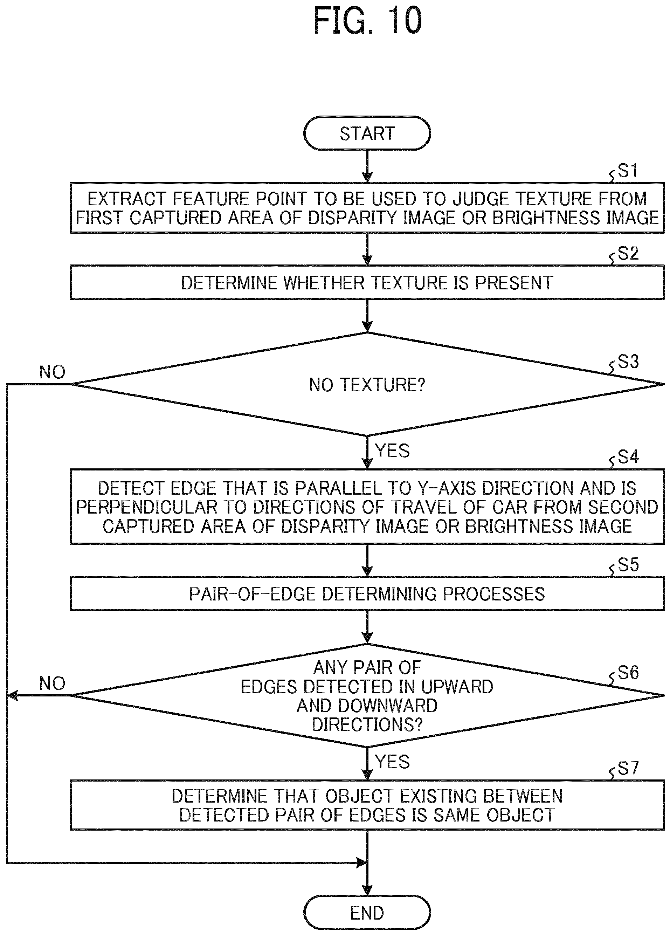

FIG. 10 is a flowchart of the object detection processes of the object detector 43 which is implemented by the CPU 22 based on an object detection program, according to the present embodiment.

In a step S1 of the flowchart of FIG. 10, the feature point extraction unit 51 illustrated in FIG. 7 extracts a feature point to be used to judge the texture from the first capturing area 31 of a disparity image (or a brightness image where appropriate). Then, in a step S2, the texture determining unit 52 determines whether or not a texture is present.

More specifically, the feature point extraction unit 51 detects the edges or corner of an object from the first disparity image or a brightness image using a feature detection method such as the Sobel edge detector, the Canny edge detector, or the Harris operator. In a step S3, when the detected edge amount is smaller than a predetermined amount ("YES" in the step S3), the texture determining unit 52 determines that "no texture is present (no feature point)."

For example, when any one of the following first to third conditions is met, the texture determining unit 52 determines that "no texture is present" on the first disparity image.

<First Condition>

Dimension of First Disparity Image Area × Threshold > Number of Pixels on Obtained Edges

When the above first condition is adopted, the texture determining unit 52 determines that "no texture is present" on the first disparity image when the number of the pixels of the edges that are detected from the first disparity image is less than the value of the dimension of the first disparity image area multiplied by a predetermined threshold.

<Second Condition>

Dimension of First Disparity Image Area × Threshold > Number of Obtained Feature Points

When the above second condition is adopted, the texture determining unit 52 determines that "no texture is present" on the first disparity image when the number of feature points such as the edges that are detected from the first disparity image is less than the value of the dimension of the first disparity image area multiplied by a predetermined threshold.

<Third Condition>

Dimension of First Disparity Image Area × Threshold > Number of Obtained Disparity Points

When the above third condition is adopted, the texture determining unit 52 determines that "no texture is present"

on the first disparity image when the number of the disparity points that are detected from the first disparity image is less than the value of the dimension of the first disparity image area multiplied by a predetermined threshold.

When the first disparity image is an image obtained by capturing a wall without, for example, patterns or characteristic bumps and dips, for example, almost no edge or characteristic bump and dip is detected from the first disparity image. In such cases, the detected edge amount becomes smaller than a predetermined amount, and the texture determining unit 52 determines in the step S3 that "no texture is captured (no texture is present) on the first disparity image." Accordingly, the process shifts to a step S4.

On the other hand, when it is determined that there are some edges on the first disparity image and the amount of edge is equal to or greater than a predetermined amount ("NO" in the step S3), the processes in the flowchart of FIG. 10 are terminated, and the object determining unit 55 performs regular object detection based on the first disparity image that is captured through the first capturing area 31.

Next, when it is determined that "no texture is present" on the first disparity image and the process proceeds to the step S4, the switching control unit 53 controls the feature point extraction unit 51 to extract feature points (i.e., to detect, for example, edges) from a second disparity image (or a brightness image where appropriate) captured through the periphery of the wide-angle lens, which corresponds to the second capturing area 32. More specifically, the feature point extraction unit 51 regards the vertical direction and the horizontal direction of the two-dimensional second disparity image to be the X-axis direction and the Y-axis direction, respectively, and detect edges in the Y-axis direction. Due to this configuration, edges are detected that are parallel to the Y-axis direction and are perpendicular to the directions of travel of the car (i.e., in the three-dimensionally orthogonal direction).

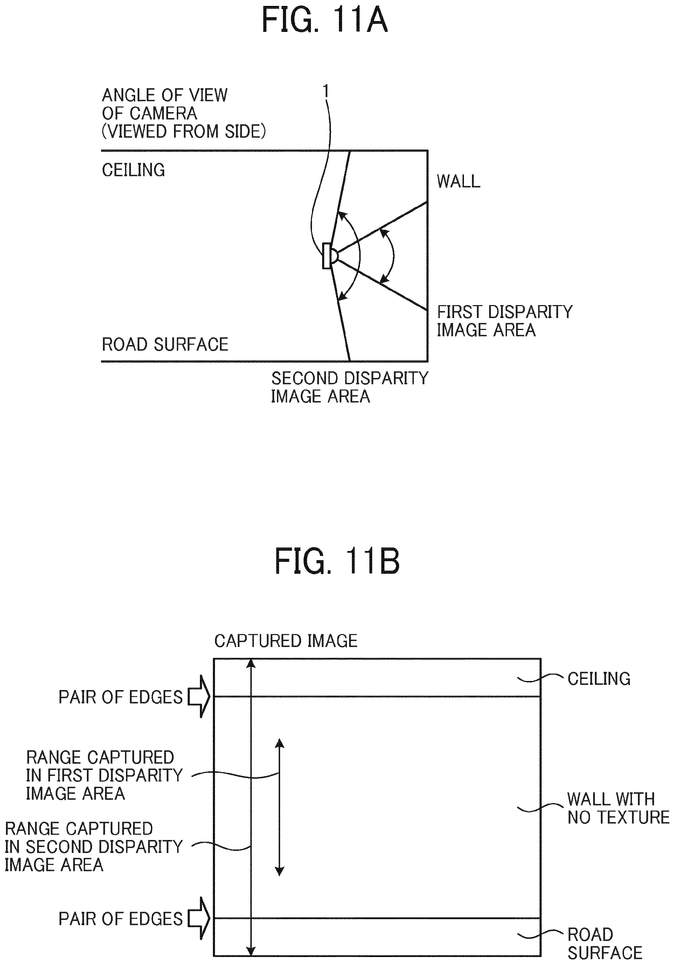

More specifically, as illustrated in FIG. 11A for example, it is assumed that a wall with a little texture is captured through the first capturing area that corresponds to the center of the wide-angle lens, in a state where a ceiling is present in the upward direction and a road surface is present in the downward direction. In such a configuration, as illustrated in FIG. 11B, the feature point extraction unit 51 detects the edges in the Y-axis direction that correspond to the boundary between the wall and the ceiling and the edges in the Y-axis direction that correspond to the boundary between the wall and the road surface, in the up-and-down directions of a wall with little texture (in the up-and-down directions with reference to the image-capturing direction). In other words, the feature point extraction unit 51 detects a pair of edges, i.e., a pair of feature points.

More specifically, the feature point extraction unit 51 performs edge detection based on the first disparity image that is captured through the first capturing area 31, until instructions are given by the switching control unit 53. By contrast, after instructions are given by the switching control unit 53, the feature point extraction unit 51 performs edge detection based on the second disparity image that is captured through the second capturing area 32.

When the feature point extraction unit 51 detects no pair of edges from the second capturing area 32, the switching control unit 53 controls the feature point extraction unit 51 to perform edge detection again using the first disparity image that is captured through the first capturing area 31. In other word, the disparity image from which an edge is to be detected is returned from the second disparity image to the first disparity image.

Once a pair of edges is detected as above, in the step S5, the pair-of-edge determining unit 54 determines whether or not a pair of detected edges are boundaries of the same object (pair-of-edge determining processes).

For example, when the distance between the detected two straight lines is equal to or shorter than a threshold, the pair-of-edge determining unit 54 determines that each of these two straight lines is a boundary line of the same object. Note that the condition in which the distance between the detected two straight lines is equal to or shorter than a threshold is referred to as the first condition. Moreover, when the difference in length between the detected two straight lines is equal to or shorter than a certain threshold, the pair-of-edge determining unit 54 determines that each of these two straight lines is a boundary line of the same object. Note that the condition in which the difference in length between the detected two straight lines is equal to or shorter than a certain threshold is referred to as the second condition. Further, when the difference in angle between the detected two straight lines is equal to or narrower than a certain angle, the pair-of-edge determining unit 54 determines that each of these two straight lines is a boundary line of the same object. Note that the condition in which the difference in angle between the detected two straight lines is equal to or narrower than a certain angle is referred to as the third condition.

Note also that the pair-of-edge determining unit 54 may perform pair-of-edge determining processes using one of the above first to third conditions, or may perform pair-of-edge determining processes using two or more of the above first to third conditions in combination.

Next, in a step S6, the object determining unit 55 determines whether or not a pair of edges are detected in the upward and downward directions of the second disparity image based on the result of the determination made by the pair-of-edge determining unit 54. When a pair of edges are detected, in a step S7, the object determining unit 55 determines that the object existing between the detected pair of edges is the same object, and terminates the processes in the flowchart of FIG. 10.

When it is determined in the step S6 that a pair of edges are not detected in the upward and downward directions of the second disparity image based on the result of the determination made by the pair-of-edge determining unit 54, the object determining unit 55 terminates the overall processes in the flowchart of FIG. 10.

For example, as illustrated in FIG. 11B, even in cases where only a wall with a little texture is captured in the first disparity image that is captured through the center of the wide-angle lens, an object in the area ranging from the ground to the ceiling is captured in the second disparity image that is captured through the periphery of the wide-angle lens. Due to this configuration, object detection can be performed based on the second disparity image. For example, as illustrated in FIG. 11A, when the capturing area is set with the angle of view of the stereo camera 1, only a wall with a little texture is captured in the first disparity image that is captured through the center of the wide-angle lens. Thus, it is difficult to detect an object.

However, the boundary between the road surface and the wall as well as the boundary between the ceiling and the wall are captured in the second disparity image that is captured through the periphery of the wide-angle lens. Due to this configuration, if the second disparity image that is captured through the periphery of the wide-angle lens is used, even an object such as a wall with a little texture can be detected with a high degree of precision.

[Modification of First Embodiment]

In the first embodiment as described above, pair of edges are detected in the up-and-down directions. However, as illustrated in FIG. 8B, a pair of edges in the right and left directions of the second disparity image (i.e., the direction two-dimensionally orthogonal to the up-and-down directions) may be detected. In other words, a pair of edges in the X-axis direction, which is parallel to the vertical direction of the second disparity image, may be detected. Alternatively, pair-of-edge determining processes in the up-and-down directions and pair-of-edge determining processes in the right and left directions may be performed in combination. Further, other than the up-and-down directions and the right and left directions, the directions in which a pair of edges are to be detected are configurable as desired. For example, a pair of edges may be detected in an obliquely upward direction and an obliquely downward direction.

<Second Embodiment>

Next, the equipment control system according to a second embodiment is described. As described above, objects are to be detected based on disparity images. When an object that was detected in the previous frame was detected again in the subsequent frame, the objects that were detected in these frames are determined to be the same object, and can be tracked.

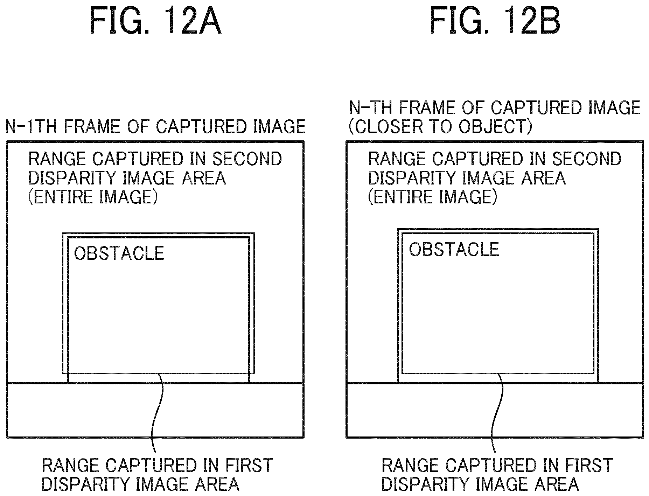

However, as the distance to the object that was detected in succession as above gets shorter gradually, it becomes difficult to detect that object after a certain frame. In other words, the frame illustrated in FIG. 12A that expands towards the outside with reference to the obstacle is the capturing area of the first disparity image that is captured through the center of the wide-angle lens as above. In the example case illustrated in FIG. 12A, the edges of the obstacle on the right and left sides are well within the captured range of the first disparity image. Accordingly, the obstacle can be detected.

As the distance to the obstacle gets shorter as illustrated in FIG. 12B, it becomes difficult to detect the edges of the obstacle on the right and left sides from the frame where the edges of the obstacle on the right and left sides overlap with the right and left sides of the capturing area of the first disparity image. When the edges of the obstacle on the right and left sides move from a right-and-left side position of the capturing area of the first disparity image to an outer position of the capturing area of the first disparity image, it becomes even more difficult to detect the edges of the obstacle on the right and left sides. In order to deal with such a situation, in the equipment control system according to the second embodiment, as will be described below in detail, object detection is performed using the second disparity image that includes the disparity image that is captured through the periphery of the wide-angle lens as described above.

Note that the second embodiment as will be described later is different from the first embodiment as described above only in this respect. For this reason, only the differences between the second embodiment and the first embodiment will be described below, and overlapping descriptions are omitted where appropriate.

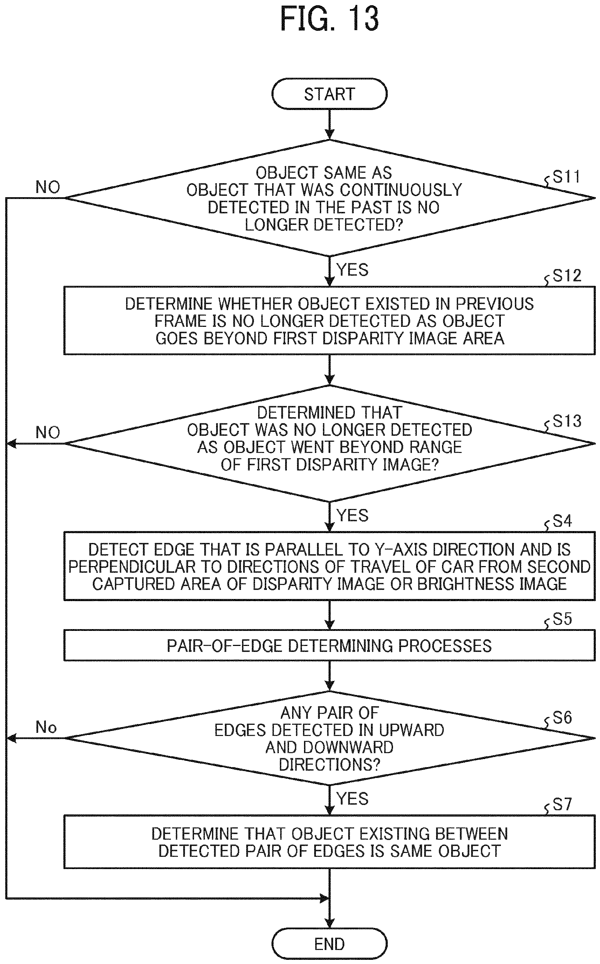

FIG. 13 is a flowchart of the object detection processes in the equipment control system according to the second embodiment.

As illustrated in the flowchart of FIG. 13, in the second embodiment of the present disclosure, when the object that was continuously detected in a step S11, step S12, and a step S 13 is no longer detected, it is determined as to whether the object is no longer detected as the object has gone beyond the capturing area of the first disparity image. When it is determined that an object that was continuously detected in the past is no longer detected as the object went beyond the captured range of the first disparity image, object detection is performed as above in the steps S4 to S7, using the second disparity image. Note that the processes in the steps S4 to S7 are equivalent to the processes in the steps S4 to S7 in the flowchart of FIG. 10. For this reason, the processes in the step S11, the step S12, and the step S13 are explained in the following description. See the description of the first embodiment as described above for the processes in the steps S4 to S7 in the flowchart of FIG. 13.

In the step S11, the object determining unit 55 as illustrated in FIG. 7 compares the object detected from the disparity image of the previous frame with the object detected from the disparity image of the current frame. By so doing, the object determining unit 55 determines whether an object same as the object that was continuously detected in the past is no longer detected. when the object same as the object that was continuously detected in the past is still detectable in the current frame ("YES" in the step S11), the overall processes are terminated in the flowchart of FIG. 13.

By contrast, when the object same as the object that was continuously detected in the past is no longer detectable in the current frame ("NO" in the step S11), the process proceeds to the step S12. In the step S12, the object determining unit 55 determines, based on one of the first to third conditions given below, whether an object that was continuously detected in the past is no longer detected as the object has gone beyond the capturing area of the first disparity image that corresponds to the center of the wide-angle lens.

More specifically, the object determining unit 55 performs the determining processes in the step S11 using at least one of the first to third conditions given below.

<First Condition>

A first condition as to whether at least a predetermined number of frames are detected as the same object in the past (note that a threshold may serve as such a predetermined number).

<Second Condition>

A second condition as to whether the distance is getting shorter as time progresses from the past to the present time.

<Third Condition>

A third condition as to whether the distance to the object when the object was detected for the last time is equal to or shorter than a predetermined length (equal to or shorter than a threshold length).

If an object that was continuously detected in the past is no longer detected despite the fact that the object does not go beyond the capturing area of the first disparity image, it means that an object that was continuously detected in the past has gone out of the frame due to, for example, a right turn or a left turn. For this reason, when an object that was continuously detected in the past is no longer detected despite the fact that the object does not go beyond the capturing area of the first disparity image ("NO" in the step S13), the processes in the flowchart of FIG. 13 terminate.

By contrast, when it is determined that an object that was continuously detected in the past is no longer detected as the object has gone beyond the captured range of the first disparity image ("YES" in the step S13), the process proceeds to the step S4 and the step S5, and object detection is performed as above for the object, which was continuously detected in the past, in the range of the second disparity image that corresponds to the periphery of the wide-angle lens.

Due to the configuration as described above, object detection can be continued for an object that was continuously detected from the captured range of the first disparity image in the past (or the object can be tracked) using a second disparity image that corresponds to the periphery of the wide-angle lens. Also in the configuration according to the second embodiment, advantageous effects similar to those of the first embodiment of the present disclosure as described above can be achieved.

<Third Embodiment>

Next, the equipment control system according to a third embodiment is described.

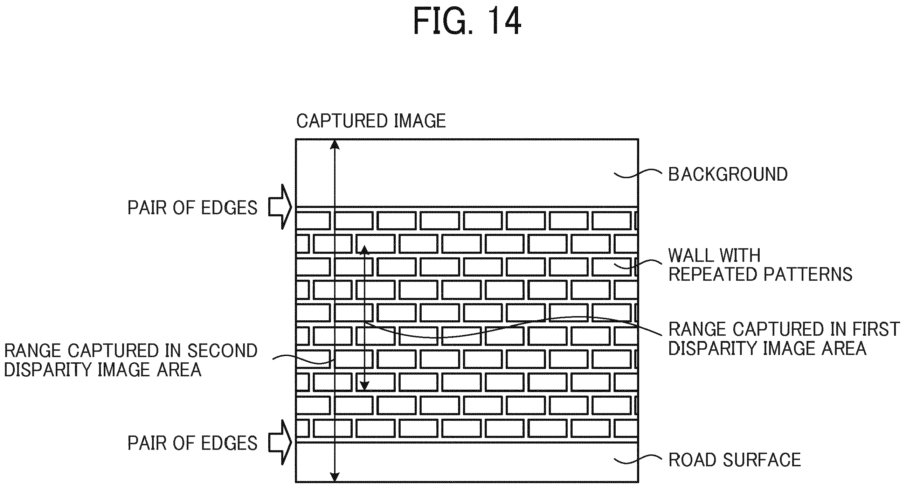

FIG. 14 is a diagram illustrating a wall formed by stacking rectangular-parallelepiped bricks, according to the present embodiment.

In this case, repeated rectangular patterns appear on the surface of the wall. If disparity computation is performed based on such a captured image with repeated patterns, several points match between the a base image and a comparison image, and a disparity value that is different from the actual distance may be calculated (such an erroneous disparity value may be referred to as an error in disparity calculation). Such an erroneous disparity value may constitute an obstacle to accurate object detection.

In order to deal with such a situation, in the equipment control system according to the third embodiment, an object is detected using the second disparity image when some repeated patterns are detected from the first disparity image that corresponds to an image captured through the center of the wide-angle lens. Note that the third embodiment as will be described later is different from the above embodiments as described above only in this respect. For this reason, only the differences between the second embodiment and the first embodiment will be described below, and overlapping descriptions are omitted where appropriate.

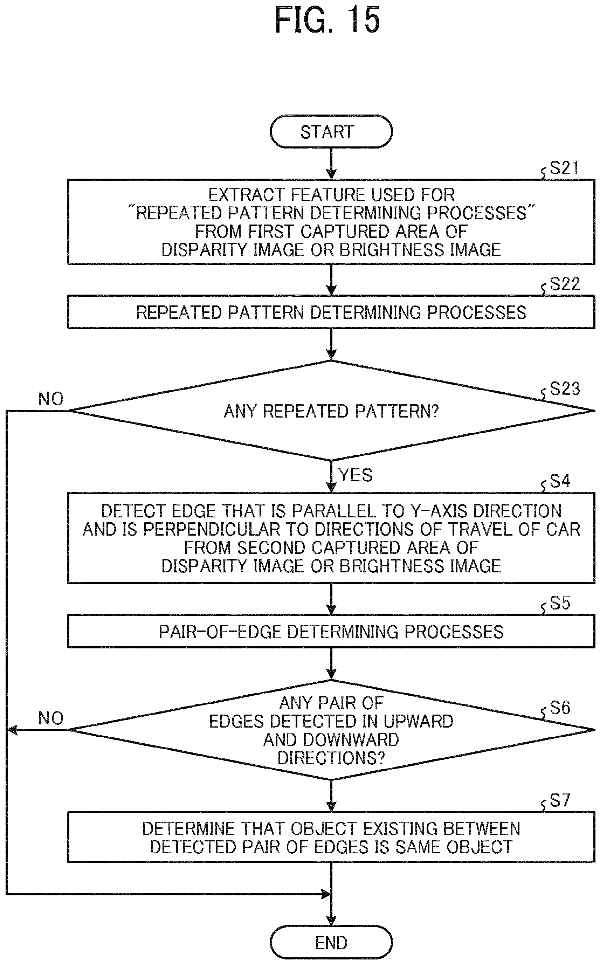

FIG. 15 is a flowchart of the object detection processes in the equipment control system according to the third embodiment.

As illustrated in the flowchart of FIG. 15, in the third embodiment of the present disclosure, whether or not there is any repeated pattern on the first disparity image is determined in a step S21, a step S22, and a step S23. When it is determined that there are some repeated patterns on the first disparity image, in the steps S4 to S7, an object is detected also from the second disparity image that corresponds to an image captured through the periphery of the wide-angle lens. Note that the processes in the steps S4 to S7 in the flowchart of FIG. 15 are equivalent to the processes in the steps S4 to S7 in the flowchart of FIG. 10. For this reason, the processes in the step S21, the step S22, and the step S23 are explained in the following description. See the description of the first embodiment as described above for the processes in the steps S4 to S7 in the flowchart of FIG. 15.

In a step S21, the feature point extraction unit 51 illustrated in FIG. 7 extracts a feature used for "repeated pattern determining processes" from a first disparity image (or a brightness image where appropriate) that corresponds to an image captured through the center of the wide-angle lens, and the process proceeds to a step S22. In the step S22, the texture determining unit 52 performs "repeated pattern determining processes" in which whether or not there is any repeated pattern on the first disparity image is determined.

More specifically, the texture determining unit 52 selects sample points on the first disparity image, and calculates a degree of dissimilarity (or a degree of similarity) using the disparity data of a surrounding outer portion, in the right direction or the left direction of the first disparity image. When it is determined that there are some repeated patterns, a plurality of minimum values are detected as a degree of dissimilarity. If a predetermined number of or more minimum values are calculated, it means that the surrounding outer portion of the selected sample points is a part of the repeated patterns. Accordingly, the texture determining unit 52 selects a plurality of sample points, and detects the number of minimum values in degree of dissimilarity on a sample-point-by-sample-point basis. Then, the texture determining unit 52 determines whether or not there is any repeated pattern on the first disparity image based on the detected number of minimum values.

More specifically, the texture determining unit 52 determines that there are some repeated patterns on the first disparity image when at least one of the first to third conditions given below are met.

<First Condition>

The number of all the selected points $\times$ Threshold < The number of sample points that are determined to be repeated patterns

<Second Condition>

Dimension of First Disparity Image $\times$ Threshold < The number of disparity points that are determined to be repeated patterns

<Third Condition>

The number of the disparity points that are calculated from the first disparity image x Threshold < The number of disparity points that are determined to be repeated patterns

For example, a method is known in the art in which repeated patterns are detected on a pixel-by-pixel basis using a value of matching cost (a value of a degree of dissimilarity) when a disparity is calculated (see, for example, JP-2016-166850-A). Such a known method may be used in the present embodiment.

Alternatively, it may be determined that there are some repeated patterns on the first disparity image when an error in disparity calculation occurs on the first disparity image at a rate equal to or higher than a predetermined value (for example, at a rate of 80% or more). Alternatively, it may be determined that there are some repeated patterns on the first disparity image when the cost curve of the disparity calculation indicates a predetermined rate of change.

Alternatively, upon calculating a disparity value between the detected pair of edges, an accurate disparity value may be estimated by detecting a disparity value close to the disparity value of the pair of edges from among the disparity values obtained from the first disparity image.

The texture determining unit 52 detects repeated patterns, as illustrated in FIG. 14, from the first disparity image, based on the conditions as described above. When some repeated patterns are detected from the first disparity image, the pair-of-edge determining unit 54 detects a pair of edges from the second disparity image, as illustrated in FIG. 14, in the steps S4 to S7, and the object determining unit 55 performs object detection based on the detected pair of edges.

In the equipment control system according to the third embodiment as above, when there are some repeated patterns and it is difficult to calculate a disparity value using the first disparity image, for example, object detection is performed using the second disparity image that is obtained by capturing an area such as a wall or a ceiling where the chances of the existence of repeated patterns are low. Alternatively, the disparity value of the first disparity image area is estimated. Accordingly, object detection can be performed with a high degree of precision without being affected by repeated patterns, and advantageous effects similar to those of the embodiments as described above can be achieved.

<Modification of Third Embodiment>

When a glass plane is captured on the first disparity image, object detection may be performed using the second disparity image. In other words, when a glass plane exists in the first disparity image, both the scene existing on the other side of the glass and the scene on the near side that is reflected by the glass appear on the glass, and the distance of the background and the distance to an object that appears on the glass are calculated in a mixed manner.

In such cases, the variance in the disparity value of the first disparity image increases compared with cases in which a planar non-glass object that is at the same distance on its entirety appear. For this reason, the texture determining unit 52 determines that a glass plane is captured on the first disparity image when each of the distributed disparity values on the first disparity image takes a value greater than a threshold as in the condition given below.

Distributed Disparity Values on First Disparity Image > Threshold

Depending on the above determination, the object determining unit 55 switches from object detection with the first disparity image to object detection with the second disparity image. Due to this configuration, even when a glass plane is captured on the first disparity image, object detection with a high degree of precision can be achieved, and advantageous effects similar to those of the embodiments as described above can be achieved.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. For example, a distance value and a disparity value can be handled in an equivalent manner. In the embodiments of the present disclosure as described above, a disparity image is used as an example of a distance image. However, no limitation is intended thereby. For example, a disparity image that is generated using a stereo camera may be integrated with distance data that is generated using a detector such as a millimeter-wave radar and a light detection and ranging (LiDAR) device to generate a distance image. Alternatively, the stereo camera and a detector such as a millimeter-wave radar and a light detection and ranging (LiDAR) device may be used in combination, and the results of the object detection using a stereo camera as described above may be combined with distance data to further improve the detection accuracy.

Alternatively, one of the lenses of the stereo camera may be a wide-angle lens, and the other one of the lenses of the stereo camera may be a lens with an angle of view narrower than a wide-angle lens or the one of the lenses of the stereo camera. Moreover, the area captured with the angle of view in common between A and B may be the first captured-image area, and the area captured with the angle of view of the wide-angle lens not overlapping with the narrow-angle lens may be the second captured-image area. In such a configuration, for example, the RGB values or the brightness values of two certain points of the second captured-image area may be compared with each other, and it may be estimated that an object exists in the first captured-image area when the difference between these two points is equal to or smaller than a prescribed value and no object is detected in the first captured-image area that is positioned between these two points of the second captured-image area.

Further, as described above, any one of the above-described and other methods of the present invention may be embodied in the form of a computer program stored on any kind of storage medium. Examples of storage media include, but are not limited to, flexible disks, hard disks, optical discs, magneto-optical discs, magnetic tape, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a CPU, a RAM, and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

**Claims**

1. An object detector (1) comprising:

   a feature point detector (22, 51) configured to detect from a captured image a prescribed at least one feature point to be used for object detection, the captured image including a first captured-image area captured in a first capturing area (31) that corresponds to a center of a wide-angle lens having a prescribed angle of view, or a second captured-image area captured in a second capturing area (32) that corresponds to a periphery of the wide-angle lens; and
   an object detector (22, 43) configured to detect an object existing in the first captured-image area based on the prescribed at least one feature point detected from the first captured-image area when the prescribed at least one feature point is detected from the first captured-image area and an amount of feature point detected from the first captured-image area by the feature point detector (22, 51) is equal to or greater than a predetermined amount, and to detect an object existing in the captured image based on the prescribed at least one feature point detected from the second captured-image area when the prescribed at least one feature point is detected from the second captured-image area and the amount of feature point detected from the first captured-image area is smaller than the predetermined amount.

2. The object detector (1) according to claim 1, wherein
   the prescribed at least one feature point comprises a plurality of feature points, and
   when the plurality of feature points are detected from the second captured-image area, the object detector (22, 43) detects at least one of a pair of feature points existing in up-and-down directions with reference to an image-capturing direction and a pair of feature points existing in right and left directions two-dimensionally orthogonal to the up-and-down directions.

3. The object detector (1) according to claim 1 or 2, wherein when a same object that was continuously detected in the past in the first captured-image area is no longer detected, the object detector (22, 43) detects the same object from the second captured-image area.

4. The object detector (1) according to any one of claims 1 to 3, wherein the object detector (22, 43) performs the object detection based on the second captured-image area when a same texture repeatedly appears in the first captured-image area.

5. The object detector (1) according to any one of claims 1 to 4, wherein when a glass plane appears in the first captured-image area, the object detector (22, 43) perform the object detection based on the second captured-image area.

6. An imager (1) comprising:

   an imaging device (3, 4) configured to capture an image in a prescribed capturing area from two different points and output the captured image;
   a disparity image generator (22, 42) configured to generate a disparity image using the captured image output from the imaging device (3, 4); and
   the object detector (22, 43) according to claim 1,

wherein the object detector (22, 43) divides the disparity image into a first disparity image area and a second disparity image area, and performs object detection based on the first disparity image area and the second disparity image area when a result of object detection performed based on the first disparity image area meets a prescribed condition, the first disparity image area and the second disparity image area being obtained from the first captured-image area and the second captured-image area, respectively.

7. A method of detecting an object, the method comprising:

detecting a prescribed feature point to be used for object detection, from a first captured-image area captured in a first capturing area (31) that corresponds to a center of a wide-angle lens having a prescribed angle of view or a second captured-image area captured in a second capturing area (32) that corresponds to a periphery of the wide-angle lens;

detecting, when the prescribed feature point is detected from the first captured-image area and an amount of feature point detected from the first captured-image area by the detecting the prescribed feature point is equal to or greater than a predetermined amount, an object existing in the first captured-image area based on the prescribed feature point detected from the first captured-image area; and

detecting an object existing in the captured image based on the feature point detected from the second captured-image area when the prescribed feature point is detected from the second captured-image area and the amount of feature point detected from the first captured-image area is smaller than the predetermined amount.

8. A carrier means carrying computer readable code for controlling a computer system to carry out the method of claim 7.

9. An equipment control system comprising:

an imager (1) including

an imaging device (3, 4) configured to capture an image in a prescribed capturing area from two different points and output a captured image,

a disparity image generator (22, 42) configured to generate a disparity image using the captured image output from the imaging device (3, 4), the disparity image generated by the disparity image generator (22, 42) including a first disparity image obtained from a first capturing area (31) that corresponds to a center of a wide-angle lens having a prescribed angle of view and a second disparity image obtained from a second capturing area (32) that corresponds to a periphery of the wide-angle lens,

a feature point detector (22, 51) configured to detect a prescribed feature point to be used for object detection from the first disparity image and the second disparity image, and

an object detector (22, 43) configured to detect an object existing in the first disparity image based on the feature point detected from the first disparity image when an amount of feature point detected from the first disparity image by the feature point detector (22, 51) is equal to or greater than a predetermined amount, and to detect an object existing in the second disparity image based on the feature point detected from the second disparity image when the amount of feature point detected from the first disparity image is smaller than the predetermined amount; and

a controller (44) configured to control prescribed operation of the imager (1) based on a result of the object detection.

# FIG. 1

LEFT FIELD OF VISION

RIGHT FIELD OF VISION

1

DIRECTION OF TRAVEL
OF VEHICLE

# FIG. 2

# FIG. 3

# FIG. 4

BASE IMAGE

COMPARISON IMAGE

# FIG. 5

# FIG. 6

# FIG. 7

# FIG. 8A

W

OBSTACLE

D

SECOND DISPARITY
IMAGE AREA

1

FIRST DISPARITY
IMAGE AREA

# FIG. 8B

RANGE OF SECOND
DISPARITY IMAGE AREA

PAIRING EDGE

PAIRING EDGE

OBSTACLE

H

RANGE OF FIRST
DISPARITY IMAGE AREA

# FIG. 9

SMALL ERROR IN DISTANCE

RADIUS Xm

$\theta$

GREAT ERROR
IN DISTANCE

4

3

# FIG. 10

```
                    ┌─────────────┐
                    │    START    │
                    └─────────────┘
                           │
                           ▼                          ⌐S1
┌──────────────────────────────────────────────────────────┐
│ EXTRACT FEATURE POINT TO BE USED TO JUDGE TEXTURE FROM     │
│ FIRST CAPTURED AREA OF DISPARITY IMAGE OR BRIGHTNESS IMAGE │
└──────────────────────────────────────────────────────────┘
                           │
                           ▼                          ⌐S2
┌──────────────────────────────────────────────────────────┐
│          DETERMINE WHETHER TEXTURE IS PRESENT             │
└──────────────────────────────────────────────────────────┘
                           │
                           ▼
         NO              ╱─────────────╲                ⌐S3
      ◄─────────────────◄   NO TEXTURE?  ►─────────────►
                         ╲─────────────╱
                           │ YES
                           ▼                          ⌐S4
┌──────────────────────────────────────────────────────────┐
│ DETECT EDGE THAT IS PARALLEL TO Y-AXIS DIRECTION AND IS    │
│ PERPENDICULAR TO DIRECTIONS OF TRAVEL OF CAR FROM SECOND   │
│ CAPTURED AREA OF DISPARITY IMAGE OR BRIGHTNESS IMAGE       │
└──────────────────────────────────────────────────────────┘
                           │
                           ▼                          ⌐S5
┌──────────────────────────────────────────────────────────┐
│           PAIR-OF-EDGE DETERMINING PROCESSES              │
└──────────────────────────────────────────────────────────┘
                           │
                           ▼
                      ╱──────────────╲
         NO          ╱  ANY PAIR OF    ╲             ⌐S6
      ◄─────────────◄ EDGES DETECTED IN  ►
                     ╲ UPWARD AND DOWNWARD╱
                      ╲   DIRECTIONS?    ╱
                        ╲──────────────╱
                           │ YES
                           ▼                          ⌐S7
┌──────────────────────────────────────────────────────────┐
│      DETERMINE THAT OBJECT EXISTING BETWEEN               │
│      DETECTED PAIR OF EDGES IS SAME OBJECT                │
└──────────────────────────────────────────────────────────┘
                           │
                           ▼
                    ┌─────────────┐
                    │     END     │
                    └─────────────┘
```

# FIG. 11A

ANGLE OF VIEW
OF CAMERA
(VIEWED FROM SIDE)

CEILING

WALL

FIRST DISPARITY
IMAGE AREA

ROAD SURFACE

SECOND DISPARITY
IMAGE AREA

# FIG. 11B

CAPTURED IMAGE

CEILING

PAIR OF EDGES

RANGE CAPTURED
IN FIRST DISPARITY
IMAGE AREA

WALL WITH
NO TEXTURE

RANGE CAPTURED
IN SECOND DISPARITY
IMAGE AREA

PAIR OF EDGES

ROAD
SURFACE

# FIG. 12A

N-1TH FRAME OF CAPTURED IMAGE

RANGE CAPTURED IN SECOND
DISPARITY IMAGE AREA
(ENTIRE IMAGE)

OBSTACLE

RANGE CAPTURED IN FIRST
DISPARITY IMAGE AREA

# FIG. 12B

N-TH FRAME OF CAPTURED IMAGE
(CLOSER TO OBJECT)

RANGE CAPTURED IN SECOND
DISPARITY IMAGE AREA
(ENTIRE IMAGE)

OBSTACLE

RANGE CAPTURED IN FIRST
DISPARITY IMAGE AREA

# FIG. 13

```
                    ( START )
                        |
                        v
      +---------------------------------------------+
  NO  /            OBJECT SAME AS                    \  S11
<-----  OBJECT THAT WAS CONTINUOUSLY
      \ DETECTED IN THE PAST IS NO                   /
        \        LONGER DETECTED?                  /
          +-----------------------------------+
                        | YES
                        v
      +---------------------------------------------+  S12
      | DETERMINE WHETHER OBJECT EXISTED IN PREVIOUS|
      |  FRAME IS NO LONGER DETECTED AS OBJECT       |
      |  GOES BEYOND FIRST DISPARITY IMAGE AREA      |
      +---------------------------------------------+
                        |
                        v
      +---------------------------------------------+
  NO  /           DETERMINED THAT                    \  S13
<-----  OBJECT WAS NO LONGER DETECTED
      \  AS OBJECT WENT BEYOND RANGE                  /
        \     OF FIRST DISPARITY IMAGE?             /
          +-----------------------------------+
                        | YES
                        v
      +---------------------------------------------+  S4
      | DETECT EDGE THAT IS PARALLEL TO Y-AXIS DIRECTION AND IS |
      | PERPENDICULAR TO DIRECTIONS OF TRAVEL OF CAR FROM SECOND|
      | CAPTURED AREA OF DISPARITY IMAGE OR BRIGHTNESS IMAGE    |
      +---------------------------------------------+
                        |
                        v
      +---------------------------------------------+  S5
      |       PAIR-OF-EDGE DETERMINING PROCESSES     |
      +---------------------------------------------+
                        |
                        v
      +---------------------------------------------+
  No  /             ANY PAIR OF                      \  S6
<-----  EDGES DETECTED IN UPWARD
      \          AND DOWNWARD                         /
        \          DIRECTIONS?                      /
          +-----------------------------------+
                        | YES
                        v
      +---------------------------------------------+  S7
      | DETERMINE THAT OBJECT EXISTING BETWEEN       |
      | DETECTED PAIR OF EDGES IS SAME OBJECT        |
      +---------------------------------------------+
                        |
                        v
                    ( END )
```

# FIG. 14

CAPTURED IMAGE

BACKGROUND

PAIR OF EDGES

WALL WITH
REPEATED PATTERNS

RANGE CAPTURED IN FIRST
DISPARITY IMAGE AREA

RANGE CAPTURED IN SECOND
DISPARITY IMAGE AREA

PAIR OF EDGES

ROAD SURFACE

EP 3 373 199 A2

# FIG. 15

```
                        ┌─────────┐
                        │  START  │
                        └────┬────┘
                             │
                             ▼                              S21
   ┌────────────────────────────────────────────────────────┐
   │              EXTRACT FEATURE USED FOR                    │
   │     "REPEATED PATTERN DETERMINING PROCESSES"             │
   │              FROM FIRST CAPTURED AREA OF                 │
   │        DISPARITY IMAGE OR BRIGHTNESS IMAGE               │
   └────────────────────────┬───────────────────────────────┘
                             │
                             ▼                              S22
   ┌────────────────────────────────────────────────────────┐
   │        REPEATED PATTERN DETERMINING PROCESSES            │
   └────────────────────────┬───────────────────────────────┘
                             │
                             ▼
            NO  ◁────────────────────────────────▷  S23
   ┌─────◁                ANY REPEATED PATTERN?           ▷
   │                         ▽ YES
   │                         │                            S4
   │  ┌────────────────────────────────────────────────────────┐
   │  │    DETECT EDGE THAT IS PARALLEL TO Y-AXIS DIRECTION      │
   │  │ AND IS PERPENDICULAR TO DIRECTIONS OF TRAVEL OF CAR      │
   │  │            FROM SECOND CAPTURED AREA OF                  │
   │  │        DISPARITY IMAGE OR BRIGHTNESS IMAGE               │
   │  └────────────────────────┬───────────────────────────────┘
   │                           │
   │                           ▼                              S5
   │  ┌────────────────────────────────────────────────────────┐
   │  │         PAIR-OF-EDGE DETERMINING PROCESSES               │
   │  └────────────────────────┬───────────────────────────────┘
   │                           │
   │                           ▼
   │           NO           ANY PAIR OF                    S6
   ◁──────────────◁  EDGES DETECTED IN UPWARD          ▷
   │                     AND DOWNWARD
   │                      DIRECTIONS?
   │                           │
   │                           ▼                              S7
   │  ┌────────────────────────────────────────────────────────┐
   │  │   DETERMINE THAT OBJECT EXISTING BETWEEN                 │
   │  │   DETECTED PAIR OF EDGES IS SAME OBJECT                  │
   │  └────────────────────────┬───────────────────────────────┘
   │                           │
   └───────────────────────────┤
                             ▼
                        ┌─────────┐
                        │   END   │
                        └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009198445 A

- JP 2016166850 A